# EUROPEAN PATENT SPECIFICATION

(11) **EP 1 772 881 B1**
(45) Date of publication and mention of the grant of the patent: **10.12.2008**
(21) Application number: 05021892.4
(22) Date of filing: 07.10.2005
(51) Int. Cl.: H01H 25/06, G06F 3/03

(54) **Rotary push button with direction marker**
Dreh-Druckschalter mit Richtungsanzeiger
Bouton poussoir rotatif avec indicateur de direction

(43) Date of publication of application: 11.04.2007
(73) Proprietor: Harman Becker Automotive Systems GmbH, 76307 Karlsbad (DE)
(72) Inventor: Taxis, Heiko, 70794 Filderstadt (DE)
(74) Representative: Grünecker, Kinkeldey, Stockmair & Schwanhäusser Anwaltssozietät

(56) References cited:
- US-A1- 2002 196 239
- US-A1- 2003 016 208
- US-A1- 2004 118 664

## Description

### TECHNICAL FIELD

The present invention relates generally to rotary push buttons, which are preferably applied to graphical user interfaces mounted in a vehicle.

### BACKGROUND ART

Many rotary push buttons applying different technologies are known, which combine the rotary movement of a ring element and the hitting of a center button preferably positioned inside the ring element. Examples can be found in US patent Number 6,706,987, US Patent Application Publication US2004/0,154,910, and US-A-2004/118664.
An ample application field can be found in vehicles, where the user interacts with various vehicle functions such as audio/video entertainment systems, air conditioners or information systems. By manually operating the buttons the user is able to adjust, set and actuate the vehicle functions.

Rotary push buttons further comprise sensing elements for detecting and quantifying the amount and direction of a rotary movement of the ring element operated by the user and for detecting the pressing of the center element. These are typically assembled in a housing in cooperation with a mechanism that enables the appropriate movement of the button elements. In many applications, a contact adjacent to the push botton generates a signal corresponding to the on/off position of the center button and the actuator disposed in the center button. A return spring can be used to move the actuator and the button back to the original off position.
The outer ring element is assembled to allow the rotary operation by a user and the sensing elements generate a signal according to the direction and quantity of the rotation.

For a graphical user interface the manual rotation of the outer ring by an operater is used to select an menu element or to move a cursor in a volitional direction. However there are different perceptions of what a clockwise/counterclockwise rotation of the ring corresponds to for the movement of a cursor. For example a clockwise rotation can correspond to an interpreted down-direction for a scrolling function. Whereas the same clockwise rotation can be interpreted contrary as an up-direction for the scrolling function. The user has no possibility to know or infer in advance the direction interpreted by the manufacturer. This can lead to unwanted maloperations.

Accordingly an object of the present invention is to prevent a maloperation due to the different interpretations by the different manufacturers of a rotary movement of a ring element.

### SUMMARY OF THE INVENTION

To achieve the above object the present invention provides a rotary push button, comprising an outer ring, which can be subjected to rotary operations and an inner component, which can be subjected to push operations but which is stationary with respect to rotation of the outer ring. The inner component includes a visible marker. A specific positioning of the visible marker on the inner component allows an unambiguous interpretation of the resulting moving direction. During the rotation of the outer ring the outer ring segment adjacent to the marker is moved in a direction relative to the marker on the stationary inner component. By including a visible marker on the stationary inner component a user can clearly infer the moving direction used for e.g. a scrolling function. Depending on the position of the marker on the inner component a clockwise/counterclockwise rotation clearly defines a moving direction perceptible for the user.

The advantages of the present invention can be easily derived. The user, when confronted with the task of selecting an element of a menu displayed on a graphical user interface by using a conventional rotary push button does not know in advance in which way a clockwise/counterclockwise rotation of an outer ring coincides with the scroll up/scroll down direction of the graphical user interface.

This leads to maloperations as the user cannot infer or know in advance the relationship between the rotation of the outer ring and the resulting moving direction of a cursor or pointer of the graphical user interface. The user, possibly being accustomed to a certain relationship contrary to the relationship interpreted by the manufacturer has to adapt to the customized resulting moving directions used for the scroll up/scroll down function. The learning time is further prolonged due to the fact that no features facilitate the inference of the relationship chosen by the manufacturer.

The present invention is therefore useful in several ways. The user can easily derive the resulting moving direction perceptible for the user by considering the rotation of the outer ring relative to the marker. Depending on the position of the marker a clockwise rotation results in a down or up moving direction which can be easily perceived by the user in advance. Thereby maloperations are significantly reduced or even eliminated. In one advantageous embodiment, the adaptation of the user to an unfamiliar relationship between the rotation of the outer ring and the resulting perceptible moving direction is eased, because before the actual operation of the rotary push button the user may receive a visual feedback of how the rotation is defined by the manufacturer.

In another embodiment the user is able to adapt the rotary push button to his familiar interpretation of the rotation and resulting moving direction relationship. During an adjustment process the inner component and the marker thereon can be changed so as to alter the marker position relative to the outer ring. Thereby maloperations are reduced or eliminated, because the user is familiar with the resulting interpretation. Logically an adaptation to a new interpretation of the rotation definition can thereby be excluded.

### BRIEF DESCRIPTION OF THE DRAWINGS

- **FIG. 1**: is a vehicle audio head unit face plate of a navigation device.
- **FIG. 2**: is a top view of the rotary push button.
- **FIG. 3**: is another top view of the rotary push button of an advantageous embodiment.
- **FIG. 4a** and **FIG. 4b**: are top views of the rotary push button when it is subjected to rotary operations.
- **FIG. 5**: is an exploded perspective view of the rotary push button in accordance with one embodiment of the present invention.
- **FIG. 6**: illustrates a graphical user interface.
- **FIG. 7**: is a block diagram of a signal processing unit according to one embodiment of the present invention.

### DETAILED DESCRIPTION OF THE PREFERRED EMBODIMENTS

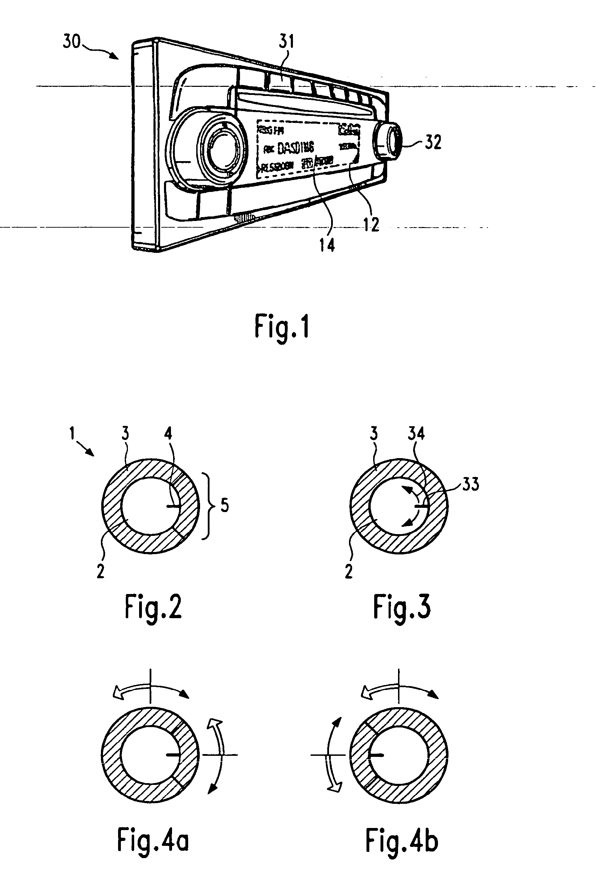

Now, preferred embodiments of the present invention will be described in detail with reference to the annexed drawings.
A typical application of rotary push buttons can be seen in **FIG. 1****.** The figure shows a head unit face plate used for navigation systems installed in vehicles. Reference number 30 shows a typical graphical user interface used for a navigation system. The user can interact with the menu 14 displayed on the display means 12 by choosing several options with the rotary push button 32 and confirming the desired option with the rotary push button 32. Specific locations can be chosen by selecting the street or the town, so as to get a path indication therefore. Additional push buttons 31 may be provided to offer other functionalities.

In **FIG. 2** a rotary push button 1 is illustrated in a top view. The rotary push button 1 comprises an inner component 2, an outer ring 3 and a visible marker 4 on the inner component. Further an adjacent ring segment 5 is defined as being the segment of the outer ring nearest to the marker. The rotary push button 1 is operated by an user. The outer ring 3 is subjected to rotary operations. With regard to the rotary operation of the outer ring 3, the inner component 2 is stationary but can be subjected to push operations. Furthermore, in this embodiment the inner component 2 is circular, however other alternatives may also be implemented by a person skilled in the art. The marker 4 is fixed on the inner component 2, so as to provide a constant reference point with respect to the movable outer ring 3. Here, a horizontal line 33 which extends in a radial direction of the circular inner component 2 is used as visible marker 4. A ring segment is being defined as the part of the ring being adjacent to the marker 4 of the inner component 2. Therefore the marker poses a perceptive and intuitive support for the user to define moving directions of the adjacent ring segment 5 relative to the marker 4, which will be explained in the following.

The marker itself is clearly visible for the user and is provided on the inner component. For the idea of the present invention it is of no importance if the marker is painted or printed on the inner component or if it is a small protrusion or indention on the inner component.

In Fig. 3 the visible marker 4 on the inner component consists of a horizontal line 33 and two arrows 34 pointing in a general vertical direction. A direct visual feedback of the action performed by a user is provided by the arrows, because the arrows clearly indicate which moving direction is achieved by a rotation of the outer ring 3.

As shown in **FIG. 4a** and **4b****,** the marker may be positioned in a different location respectively, being in a right position in **FIG. 4a** and in a left position of the inner component in **FIG. 4b****.** Other possible positions, although not shown in the figures may be an upper and lower position of the inner component.
By positioning the marker in different locations variable perceptible moving directions can be achieved. In this case the perceptible moving direction is defined as the direction in which the adjacent ring segment 5 is moved relative to the marker 4 of the inner component 2, when the outer ring 3 is subjected to rotary operations. The perceptible moving direction can be used to coincide with the moving direction of a cursor for a graphical user interface.

When the outer ring 3 is rotated and the marker is in a right position, as depicted in **FIG. 4a** an up-down perceptible moving direction is achieved. Specifically a clockwise rotation leads to a down moving direction perceptible for the user, as the adjacent ring segment 5 moves in a downward direction relative to the rotary fixed marker 4. Accordingly a counterclockwise rotation of the outer ring 3 results in an up moving direction perceptible for the user, as the adjacent ring segment 5 moves in an upward direction relative to the rotary fixed marker 4.

A left position of the marker yields contrary perceptible moving directions, as explained in detail below. **FIG. 4b** shows the rotary push button 1 in one embodiment including the marker 4 in a left position of the inner component 2. In this case, when the outer ring 3 is rotated clockwise, an up moving direction is achieved, because the adjacent ring segment 5 rotates in an upward direction relative to the rotary fixed marker 4. Consequently, a downward direction is achieved by a counterclockwise rotation, as the adjacent ring segment 5 is rotated in an upward direction relative to the rotary fixed marker 4. As shown above, contrary moving directions perceptible for the user can be attained by different positions of the marker.

Other positions of the marker cause different perceptible moving directions. For example a upper and lower positioning of the marker 4 yields left-right moving directions, perceptible for the user.
Furthermore, a user adjustment of the marker position may also be possible. A user may be accustomed to a familiar connection between the rotation of an outer ring and the resulting moving direction used for interacting with a graphical user interface. In this embodiment, the user can change the position of the inner component during an adjustment process, so as to change the position of the marker relative to the outer ring.

If the user is accustomed to a clockwise rotation leading to a down moving direction, he can choose to adjust the inner component 2 and the marker 4 thereon to a right position. Correspondingly if the user is accustomed to the contrary familiar relationship between rotation and resulting moving direction he can adjust the inner component 2 and the marker 4 during the adjustment process to the left position, so as to achieve a perceivable up moving direction during a clockwise rotation.

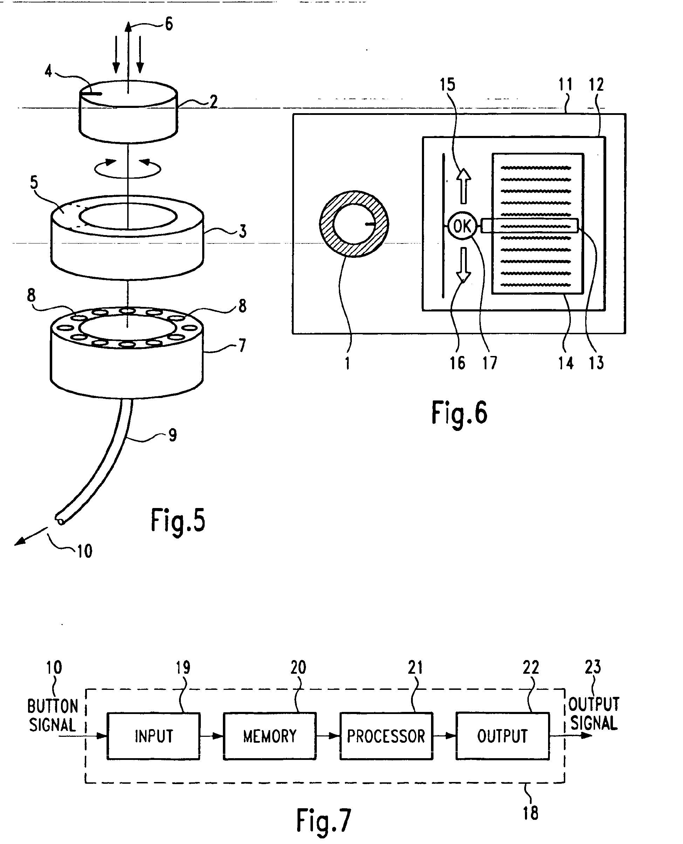

**FIG. 5** is an exploded perspective view of the rotary push button 1. The rotary push button 1 has a longitudinal axis 6, whereas the inner component 2 is longitudinally movable along the longitudinal axis 6 to define a push operation. Furthermore the outer ring 3 is rotatable about the longitudinal axis 6 to define a rotary operation. Additionally a sensor element 7 is depicted. The sensor element 7 is provided with sensor contacts 8 to detect and quantify the direction and magnitude of rotation of the outer ring 3 by the user. In addition, the sensor contacts detect the push operation of the inner component 2. Corresponding to the detected and quantified operations of the rotary push button a control signal 10 is generated, which may be used to control a vehicle function. In this embodiment, it is communicated to a graphical user interface via a cable or wire 9. The rotary push button has at least one sensor element to be able to detect and quantify the operations of the rotary push button 1 performed by the user. Other means of detecting and quantifying the operations of the rotary push button 1 are possible.

In **FIG. 6** a graphical user interface 11 is depicted, comprising a display means 12, a cursor 13, a menu 14, a scroll up direction 15, a scroll down direction 16, a confirmation action 17 and the rotary push button 1. The user interacts with the graphical user interface with suitable input/output means including the rotary push button 1 to perform various functions supported by the graphical user interface, for example operating an audio system or selecting a specific function of the information system of the vehicle. The user operates the rotary push button 1 to control the cursor 13 visible on the menu 14 displayed on the display means 12 of the graphical user interface 11. The interactions in this embodiment are limited to the scroll up direction 15, scroll down direction 16 and to the confirmation action 17. In this advantageous embodiment the interactions are displayed on the display means 12 only to give the user a visual feedback of the executed action. However it is clear that other alternatives may also be available for those skilled in the art.

From the menu one out of a plurality of optional functions can be selected by moving the cursor to the desired position with the outer ring.

By rotating the outer ring, the perceptible moving direction of the outer ring 3 relative to the marker 4 corresponds to the scroll up direction 15 or scroll down direction 16 action on the graphical user interface 11. Specifically, if the marker is positioned in a right location of the inner component, as depicted in **FIG. 6**, a clockwise rotation of the outer ring 3 results in a downward rotation of the adjacent ring segment 5 coinciding with the scroll down direction in the graphical user interface.

Accordingly, a counterclockwise rotation of the outer ring 3 leads to an upward movement of the adjacent ring segment 5 corresponding to the scroll up direction in the graphical user interface. By conducting these two actions a desired element/function of the menu 14 is selected. The confirmation signal 17 to confirm the desired function is conducted by the push operation of the inner component 2 of the rotary push button 1. In **FIG. 7** a block diagram of a signal processing unit 18 is shown, comprising input means 19, memory 20, processing means 21 and output means 22. The signal processing unit 18 can transform the control signal 10 received from the rotary push button into an appropriate output control signal 23 for the graphical user interface 11. The button control signal 10 is processed in a first instance by input means 19, thereby for example digitalizing the input.

The processed information of the actual operation of the rotary push button may be stored temporarily in a memory block 20. Afterward a processor 21 computes an appropriate interaction signal 23 for the graphical user interface 11 and finally outputs the resulting interaction signal 23 via output means 22 to the graphical user interface 11.

## Claims

1. A rotary push button (1), comprising an outer movable ring (3), subjected to rotary operations and an inner component (2) stationary with respect to the rotary operations of the outer movable ring (3), said inner component (2) being subjected to push operations and located within the outer ring (3),
**characterized in that**
the inner component (2) includes a visible marker (4), so as to indicate to a user one perceptible moving direction of the outer movable ring (3) wherein the one perceptible moving direction is perceived by the user relative to the marker when the outer movable ring is operated in one rotary direction.

2. The rotary push button according to claim 1, wherein the marker (4) consists of a horizontal line, extending in a radial direction of the inner component.

3. The rotary push button according to claim 2, wherein the marker (4) further consists of at least one arrow pointing in a general vertical direction.

4. The rotary push button according to claim 3, wherein the inner component (2) is circular and wherein the marker (4) consists of two arrows pointing in opposite circumferential directions.

5. The rotary push button according to claim 1-4, having a longitudinal axis (6), wherein the outer movable ring (3) is rotatable about the longitudinal axis (6) to define a rotary operation, and the inner component (2) is longitudinally movable along the longitudinal axis (6) to define a push operation.

6. The rotary push button according to claims 1-5, wherein the inner component (2) is adjustable by the user during an adjustment process, so as to change the position of the marker (4) relative to the outer ring (3).

7. The rotary push button according to claims 1-6, wherein the inner component (2) and/or the outer ring (3) comprise at least one sensor element (7) to sense the direction and/or magnitude of the rotary operation performed by a user.

8. The rotary push button according to claim 7, wherein the sensor element (7) generates a control signal (10) used for controlling a graphical user interface (11).

9. The rotary push button according to claim 8, wherein the control signal (10) is used to control a vehicle function.

10. The rotary push button according to claim 8, wherein the inner component (2), when subjected to a push operation is adapted to generate a confirmation signal (10) for the graphical user interface (11).

11. The rotary push button according to claim 8, wherein the outer movable ring (3), when subjected to a rotary operation is adapted to generate a direction signal (10) for moving a cursor (13) of the graphical user interface (11).

12. The rotary push button according to claim 11, wherein the outer movable ring (3), when subjected to a rotary operation is adapted to generate an up-down signal for scrolling through items of a menu (14) displayed on the graphical user interface (11).

13. The rotary push button according to one of claims 1-12, wherein the rotary operations performed by a user cause the outer ring segment (5) adjacent to the marker (4) to move in an up-down direction perceptible by the user with respect to the marker.

14. The rotary push button according to claim 11 and 13, wherein the marker (4) is located at a position such that the up-down direction perceptible for the user coincides with the moving direction of the cursor (13).

15. A head unit for a vehicle comprising:
a graphical user interface (11) having a display means (12), and
a rotary push button (1) according to one of claims 1-11.

## Patentansprüche

1. Dreh-Druckknopf (1), der einen äußeren beweglichen Ring (3), der Drehbetätigungen unterzogen wird, sowie eine innere Komponente (2) umfasst, die in Bezug auf die Drehbetätigungen des äußeren beweglichen Rings (3) stationär ist, wobei die innere . Komponente (2). Drückbetätigungen unterzogen wird und sich innerhalb des äußeren Rings (3) befindet,
**dadurch gekennzeichnet, dass**
die innere Komponente (2) eine sichtbare Markierung (4) enthält, um einem Benutzer eine wahrnehmbare Bewegungsrichtung des beweglichen äußeren Rings (3) anzuzeigen, wobei die eine wahrnehmbare Bewegungsrichtung von dem Benutzer relativ zu der Markierung wahrgenommen wird, wenn der äußere bewegliche Ring in einer Drehrichtung betätigt wird.

2. Dreh-Druckknopf nach Anspruch 1, wobei die Markierung (4) aus einer horizontalen Linie besteht, die sich in eine radiale Richtung der inneren Komponente erstreckt.

3. Dreh-Druckknopf nach Anspruch 2, wobei die Markierung (4) des Weiteren aus wenigstens einem Pfeil besteht, der in eine im Allgemeinen vertikale Richtung zeigt.

4. Dreh-Druckknopf nach Anspruch 3, wobei die innere Komponente (2) kreisförmig ist und die Markierung (4) aus zwei Pfeilen besteht, die in einander entgegengesetzte Umfangsrichtungen zeigen.

5. Dreh-Druckknopf nach Anspruch 1-4, der eine Längsachse (6) hat, wobei der äußere bewegliche Ring (3) um die Längsachse (6) herum gedreht werden kann, um einen Drehvorgang festzulegen, und die innere Komponente (2) in Längsrichtung entlang der Längsachse (6) bewegt werden kann, um eine Drückbetätigung festzulegen.

6. Dreh-Druckknopf nach den Ansprüchen 1-5, wobei die innere Komponente (2) durch den Benutzer während eines Einstellprozesses eingestellt werden kann, um die Position der Markierung (4) relativ zu dem äußeren Ring (3) zu ändern.

7. Dreh-Druckknopf nach den Ansprüchen 1-6, wobei die innere Komponente (2) und/oder der äußere Ring (3) wenigstens ein Sensorelement (7) zum Erfassen der Richtung und/oder des Maßes der durch einen Benutzer durchgeführten Drehbetätigung umfasst/umfassen.

8. Dreh-Druckknopf nach Anspruch 7, wobei das Sensorelement (7) ein Steuersignal (10) erzeugt, das zum Steuern einer grafischen Benutzerschnittstelle (11) verwendet wird.

9. Dreh-Druckknopf nach Anspruch 8, wobei das Steuersignal (10) dazu dient, eine Fahrzeugfunktion zu steuern.

10. Dreh-Druckknopf nach Anspruch 8, wobei die innere Komponente (2) so eingerichtet ist, dass sie, wenn sie einer Drückbetätigung unterzogen wird, ein Bestätigungssignal (10) für die grafische Benutzerschnittstelle (11) erzeugt.

11. Dreh-Druckknopf nach Anspruch 8, wobei der äußere bewegliche Ring (3) so eingerichtet ist, dass er, wenn er einer Drehbetätigung unterzogen wird, ein Richtungssignal (10) zum Bewegen eines Cursors (13) der grafischen Benutzerschnittstelle (11) erzeugt.

12. Dreh-Druckknopf nach Anspruch 11, wobei der äußere bewegliche Ring (3) so eingerichtet ist, dass er, wenn er einer Drehbetätigung unterzogen wird, ein Aufwärts-Abwärtssignal zum Rollen durch Elemente eines Menüs (14) erzeugt, das auf der grafischen Benutzerschnittstelle (11) angezeigt wird.

13. Dreh-Druckknopf nach einem der Ansprüche 1-12, wobei die durch einen Benutzer durchgeführten Drehbetätigungen bewirken, dass sich das äußere Ringsegment (5), das an die Markierung (4) angrenzt in einer Aufwärts-Abwärts-Richtung bewegt, die von dem Benutzer in Bezug auf die Markierung wahrgenommen werden kann.

14. Dreh-Druckknopf nach Anspruch 11 und 13, wobei die Markierung (4) an einer Position so angeordnet ist, dass die Aufwärts-Abwärts-Richtung, die für den Benutzer wahrnehmbar ist, mit der Bewegungsrichtung des Kursors (13) übereinstimmt.

15. Haupteinheit (head unit) für ein Fahrzeug, die umfasst:
eine grafische Benutzerschnittstelle (11) mit einer Anzeigeeinrichtung (12), und
einen Dreh-Druckknopf (1) nach einem der Ansprüche 1-11.

## Revendications

1. Bouton poussoir rotatif (1), comprenant une bague mobile externe (3), soumise aux opérations de rotation, et un composant interne (2) fixe par rapport aux opérations de rotation de la bague mobile externe (3), ledit composant interne (2) étant soumis aux opérations de poussée et positionné à l'intérieur de la bague externe (3),
**caractérisé en ce que :**
le composant interne (2) comprend un marqueur visible (4), afin d'indiquer à un utilisateur une direction de déplacement perceptible de la bague mobile externe (3), dans lequel l'une direction de déplacement perceptible est perçue par l'utilisateur par rapport au marqueur lorsque la bague mobile externe est actionnée dans une direction de rotation.

2. Bouton poussoir rotatif selon la revendication 1, dans lequel le marqueur (4) se compose d'une ligne horizontale, s'étendant dans une direction radiale du composant interne.

3. Bouton poussoir rotatif selon la revendication 2, dans lequel le marqueur (4) se compose en outre d'au moins une flèche pointant dans une direction généralement verticale.

4. Bouton poussoir rotatif selon la revendication 3, dans lequel le composant interne (2) est circulaire et dans lequel le marqueur (4) se compose de deux flèches pointant dans les directions circonférentielles opposées.

5. Bouton poussoir rotatif selon les revendications 1 à 4, ayant un axe longitudinal (6), dans lequel la bague mobile externe (3) peut tourner autour de l'axe longitudinal (6) afin de définir une opération de rotation, et le composant interne (2) est longitudinalement mobile le long de l'axe longitudinal (6) pour définir une opération de poussée.

6. Bouton poussoir rotatif selon les revendications 1 à 5, dans lequel le composant interne (2) est ajustable par l'utilisateur pendant un procédé d'ajustement, afin de changer la position du marqueur (4) par rapport à la bague externe (3).

7. Bouton poussoir rotatif selon les revendications 1 à 6, dans lequel le composant interne (2) et/ou la bague externe (3) comprennent au moins un élément de capteur (7) pour détecter la direction et/ou l'ampleur de l'opération de rotation réalisée par un utilisateur.

8. Bouton poussoir rotatif selon la revendication 7, dans lequel l'élément de capteur (7) génère un signal de commande (10) utilisé pour contrôler une interface utilisateur graphique (11)

9. Bouton poussoir rotatif selon la revendication 8, dans lequel le signal de commande (10) est utilisé pour contrôler une fonction de véhicule.

10. Bouton poussoir rotatif selon la revendication 8, dans lequel le composant interne (2), lorsqu'il est soumis à une opération de poussée, est adapté pour générer un signal de confirmation (10) pour l'interface utilisateur graphique (11).

11. Bouton poussoir rotatif selon la revendication 8, dans lequel la bague mobile externe (3), lorsqu'elle est soumise à une opération de rotation, est adaptée pour générer un signal de direction (10) pour déplacer un curseur (13) de l'interface utilisateur graphique (11).

12. Bouton poussoir rotatif selon la revendication 11, dans lequel la bague mobile externe (3), lorsqu'elle est soumise à une opération de rotation, est adaptée pour générer un signal haut-bas (up-down) pour faire défiler des articles d'un menu (14) affiché sur l'interface utilisateur graphique (11).

13. Bouton poussoir rotatif selon l'une des revendications 1 à 12, dans lequel les opérations de rotation réalisées par l'utilisateur amènent le segment de bague externe (5) adjacent au marqueur (4) à se déplacer dans une direction haut-bas perceptible par l'utilisateur par rapport au marqueur.

14. Bouton poussoir rotatif selon les revendications 11 et 13, dans lequel le marqueur (4) est positionné dans une position de sorte que la direction haut-bas perceptible pour l'utilisateur coïncide avec la direction de déplacement du curseur (13).

15. Unité de tête (head unit) pour un véhicule, comprenant :
une interface utilisateur graphique (11) ayant des moyens d'affichage (12), et
un bouton poussoir rotatif (1) selon l'une quelconque des revendications 1 à 11.
